(19) Europäisches Patentamt
European Patent Office
Office européen des brevets

(11) Publication number: **0 016 759**
**B1**

(12) # EUROPEAN PATENT SPECIFICATION

(45) Date of publication of patent specification: **16.02.83**

(51) Int. Cl.³: **C 08 G 18/14,** C 08 G 18/42, C 08 L 91/00

(21) Application number: **79900277.9**

(22) Date of filing: **28.02.79**

(86) International application number: **PCT/US79/00125**

(87) International publication number: **WO 79/00671 06.09.79 Gazette 79/18**

(54) **Foamed polymeric material based on polyisocyanate and the reaction product of bitumen and castor oil and intermediate products for producing this material.**

(30) Priority: **01.03.78 US 882280**

(43) Date of publication of application: **15.10.80 Bulletin 80/21**

(45) Publication of the grant of the patent: **16.02.83 Bulletin 83/7**

(84) Designated Contracting States: **FR**

(56) References cited:
FR-A-1 163 098
FR-A-2 330 720
GB-A-1 038 009
US-A-1 627 069
US-A-2 877 129
US-A-2 955 091
US-A-2 984 679
US-A-3 179 610
US-A-3 810 860
US-A-4 027 059
US-E-1 887

(73) Proprietor: **THAGARD, George, Franklin, Jr.
Lunday Thagard Oil Company
9301 South Garfield Avenue
South Gate, CA 90280 (US)**

(72) Inventor: **SANTANU, Roy Lunday-Thagard Oil Company
9301 South Garfield Avenue
South Gate, CA 90280 (US)**

(74) Representative: **Simonnot, Bernard et al,
Cabinet Simonnot 49, Rue de Provence
F-75442 Paris Cédex 09 (FR)**

(56) References cited:
**Alcohol for Industrial Purposes, US Industrial Alcohol Co. (1926) 593.U75. Copy In Class 252/366, Page 28 and Title Page.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Foamed polymeric material based on polyisocyanate and the reaction products of bitumen and castor oil and intermediate products for producing this material

Technical field

The present invention is broadly related to the field of polyurethane chemistry. More particularly, the invention relates to a process for manufacturing a foamed polymeric material from starting materials which include a bitumen such as an asphalt and a hydroxy fatty oil such as castor oil.

Background art

The term "polyurethane foam" is generally applied to foamed polymeric materials in which the polymer contains significant numbers of urethan groups, which have the characteristic structure

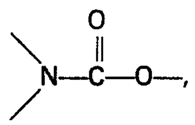

whether the urethan group repeats regularly throughout the macromolecule or not.

Polyurethane foams are ordinarily prepared by the reaction of a polyisocyanate compound with compounds having two or more "active hydrogens." Such active-hydrogen compounds include polyhydroxy compounds, generally termed polyols, and compounds containing amino groups or carboxyl groups. The active-hydrogen compound can contain functional groups in addition to groups which supply replaceable hydrogens. For example, hydroxyl-terminated polyethers and polyesters have been widely used to prepare polyurethane foams. Castor oil and other hydroxy fatty oils have also been used as active-hydrogen compounds in the production of polyurethane foams, particularly rigid and semirigid foams. Suitable catalysts are often included in the reaction mixture in order to speed the polymerization reaction, although the addition of a catalyst is not required in all applications. Gas for producing the foam is usually generated at least in part by adding water to the reactants. The water reacts with the polyisocyanate to produce carbon dioxide for foaming. In addition, blowing agents such as low-boiling halocarbons can be mixed with the reactants to produce gas for foaming. Surfactants and other additives are frequently included in the reaction mixture to regulate the size of the foam cells and otherwise influence the properties of the resulting foam.

Within the polyurethane foam family, it is possible to obtain a wide range of physical and chemical properties of the foam by appropriate selection of the specific raw materials and the reaction conditions. A detailed discussion of prior-art polyurethane compositions may be found in Kirk-Othmer, Encyclopedia of Chemical Technology, 2nd ed., (Interscience, 1970) vol. 21, pp. 56—106.

Attempts have been made to incorporate asphalts and tars into polyurethane compositions by one means or another in order to reduce the costs of the starting materials and to produce a polyurethane material having properties suited for a particular application.

One such attempt is disclosed in United States patent No. 3,179,610. The '610 patent discloses compositions obtained by blending certain polyurethane-type prepolymers with a bituminous composition such as asphalt or tar. The polyurethane prepolymers are prepared by reacting a molar excess of a polyisocyanate with a compound containing a plurality of hydroxy or carboxy groups which are reactive with isocyanate groups. Castor oil is given as an example of such a compound. By using a molar excess of the polyisocyanate when preparing the polyurethane prepolymer, unreacted isocyanate groups are present for further reaction or curing. The prepolymer thus prepared is blended with a bituminous material at room temperature or an elevated temperature, the weight of the prepolymer being from 5 percent to 25 percent of the total weight of the blend. The resulting blend can be foamed and cured in situ by adding water in amounts to react with the prepolymer, liberating carbon dioxide. The '610 patent discloses using the foamed compositions as a joint filler and sealer. All of the applications for the compositions disclosed in the '610 patent involve bonding the composition to another material in some way.

United States patent No. 3,810,860 discloses a process for polymerizing crude petroleum hydrocarbons which involves a two-component system. The first component includes a crude petroleum hydrocarbon and an arylene diisocyanate miscible with the hydrocarbon, and the second component includes a crude petroleum hydrocarbon, a hydrogen donor miscible with the hydrocarbon, and organic acid miscible with the hydrocarbon. Among the hydrogen donors disclosed in the '860 patent are mixtures of a tertiary amine and castor oil. According to the '860 patent, highly asphaltic crude petroleum hydrocarbons are generally not compatible in the second component, the component which would include castor oil were it to be incorporated in the hydrogen donor.

I have invented a process for manufacturing a foamed polymeric material and product related thereto which possess constellations of useful properties not found heretofore in the art.

Disclosure of invention

The present invention relates to a process for manufacturing a polymeric foam which comprises the step of preparing an intermediate reactant by heating a mixture of a

bitumen and a hydroxy fatty oil to a temperature substantially above room temperature and maintaining the mixture at such a temperature for a time sufficient to enable significant fractions of the bitumen and the hydroxy fatty oil to react. As used herein, the term "bitumen" refers to mixture of hydrocarbons of natural or pyrogeneous origin; or combinations of both; which may be accompanied by their nonmetallic derivatives; which may be gaseous, liquid, semisolid, or solid; and which are completely soluble in carbon disulfide. This definition is based on the one adopted by the American Society for Testing and Materials in "Terms Relating to Materials for Roads and Pavements," ASTM Designation D 8—55 (Philadelphia, 1955). In preferred embodiments of the present invention, the bitumen employed is solid or semisolid at room temperature, although at higher temperatures it may exist in a liquid or gaseous state. A preferred hydroxy fatty oil is castor oil.

The process further comprises the step of combining the intermedate reactant of the preceding paragraph with a polyhydroxy compound, a polyisocyanate, and a gas-generating agent to form a polymeric foam. The gas-generating agent is ordinarily water and a blowing agent. Preferred polyhydroxy compounds and polyisocyanates are discussed below. A particularly useful blowing agent includes a combination of dibutylphthalate and ethanol.

The present invention also relates to products made by the process described above, as well as to the intermediate reaction product between a bitumen and a hydroxy fatty oil and to the dibutylphthalate-ethanol blowing agent.

Because one of the starting materials is a bitumen, the foamed polymer of the present invention can be produced relatively inexpensively as compared with conventional polyurethane foams.

The polymeric foam of the present invention can be used in many of the conventional applications for thermosetting polyurethane foams. For example, it can be readily cast in a mold or applied as a coating to a surface. However, it also has properties which make it particularly well suited for certain applications for which conventional foamed polymers are less well suited or cannot be used at all.

Preferred foamed polymeric products of the present invention cure to materials which are strong and tough. As a consequence, the polymeric materials can be used to fabricate articles which structurally must be capable of bearing heavy loads. For example, pallets for use in warehousing and shipping can be made from a preferred foamed polymeric material of the present invention. The pallets are light, but strong enough to be hoisted about fully loaded with a fork-lift truck under typical warehousing conditions.

One feature of preferred foamed polymeric materials of the present invention is that, even after they are fully cured, they are soluble in molten asphalt. Thus shipping pallets for roofing tar made from such materials can be conveniently disposed of at a job site by breaking up the pallets and casting them into the molten asphalt in the asphalt kettles.

The foamed product of the present invention is an excellent thermal insulator. Moreover, the material is relatively impermeable to water vapor and other gases as compared to typical polyurethane foams and thus can be used to advantage as a thermal insulating material for refrigerators and the like where water condensation within an insulator can be a problem.

Certain formulations of the foamed material of the present invention are relatively inert with respect to water as compared to typical polyurethane foams and thus resist weathering. Such foams can be used to particular advantage as construction materials in the marine industry; for example, as insulation or flotation material on board ships.

Conventional polyurethane foams tend to be highly flammable and consequently expensive fire-retardant additives must often be incorporated in such foams. Foamed polymeric materials of the present invention, on the other hand, can be formulated so that the need for a fire-retardant additive is greatly reduced or even eliminated altogether for certain applications. Foamed materials of the present invention having a density in excess of 130 kg/m$^3$ tend to have relatively low flammabilities.

Preferred foamed polymeric materials of the present invention are generally odor free and are resistant to attack by mildew, mold, fungus, and the like.

The products of the present invention are ordinarily black in color and are good absorbers of solar radiation. It is anticipated, for example, that the material will find wide use as an absorbent backing for solar-powered water heaters.

Panels for use in constructing buildings can be fabricated by foaming a polymeric material of the present invention between two sheets of fiber-glass reinforced resin or the like. The resulting sandwich-like panels are light and strong and can be used, for example, as wall boards or roofing panels in the construction of houses. Inexpensive pallets for shipping and warehousing can be made with the foamed polymeric material reinforced with tar paper. It will be apparent to those skilled in the art that foamed polymeric products of the present invention can be used to make other reinforced articles and materials.

Best mode for carrying out the invention

An intermediate product can be manufactured by heating a mixture of a bitumen such as an asphalt and a hydroxy fatty oil such as castor oil to a reaction temperature substantially above room temperature, thereby inducing a thermal reaction between the two components. For typical asphalts and castor oil, the temperature range will ordinarily be between 140°C and 200°C, the preferred range being between 145°C and 155°C, although reaction temperatures outside of these ranges may be preferred for other starting materials. It will generally be preferred to employ from 20 to 100 parts by weight of the hydroxy fatty oil for each 100 parts by weight of the bitumen. The mixture of hydroxy fatty oil and bitumen is maintained at the reaction temperature for a time, typically an hour or more, sufficient to enable significant fractions of the bitumen and the hydroxy fatty oil to react.

If the reaction between the hydroxy fatty oil and the bitumen is carried out under an atmosphere of pressurized air, the resulting intermediate product generally tends to require less polyisocyanate to produce acceptable foamed polymeric materials. For example, if the reaction between a typical asphalt and castor oil is carried out under an atmosphere of air at a pressure of from 135 kPa to 170 kPa, the quantity of polyisocyanate to be reduced by up to roughly 40 percent. Exposure to an astmosphere of pressurized air can also be carried out at a later stage in the process to similar beneficial effect, for example, after the intermediate product is mixed with a polyhydroxy compound. The effect of such treatments with pressurized air is most pronounced when a non-blown bitumen is used as a starting material.

The intermediate product thus obtained is combined with other ingredients to produce the desired foam product. Such ingredients include a polyhydroxy compound, a polyisocyanate and a gas-generating agent such as water and a blowing agent. Additional ingredients such as catalysts, surfactants and plasticizers can be included if desired.

Virtually all of the polyhydroxy compounds employed in conventional polyurethane foam formulations and mixtures thereof, including both polyester polyols and polyether polyols, can be employed as the polyhydroxy compound referred to in the preceding paragraph. Representative polyether polyols include poly (oxypropylene) glycols, poly (oxypropylene-*b*-oxyethylene) glycols (block copolymers), poly (oxypropylene) adducts of glycerol, poly (oxypropylene) adducts of trimethylolpropane, poly (oxypropylene-*b*-oxyethylene) adduct of trimethylolpropane, poly (oxypropylene) adducts of 1,2,6-hexanetriol, poly (oxypropylene) adducts of pentaerythritol, poly (oxypropylene-*b*-oxyethylene) adducts of ethylenediamine (block copolymers), and poly (oxypropylene) adducts of sucrose, methylglucoside, sorbitol. Representative polyester polyols include those prepared from the following monomers: adipic acid, phthalic anhydride, ethylene glycol, propylene glycol, 1,3-butylene glycol, 1,4-butylene glycol, diethylene glycol, 1,2,6-hexanetriol, trimethylolpropane and 1,1,1-trimethylolethane. Generally it will be preferred that the polyhydroxy compounds have average molecular weights as calculated from their hydroxyl numbers in the range of from 300 to 9,000, with molecular weights in excess of 400 being particularly preferred. As specific examples, poly (oxypropylene) polyols having hydroxyl numbers in the range of from about 350 to about 800 are suitable for certain preferred formulations of the foamed polymeric material of the present invention. Another polyhydroxy compound: N,N,N′,N′-tetrakis (2-hydroxypropyl)-ethylenediamine, which is commercially available under the trade name of "Quadrol" from BASF Wyandotte Corporation, is suitable for a number of preferred formulations, as are "Niax Pentol," which is commercially available from the Union Carbide Corporation, and "Voranol," which is commercially available from Dow Chemical Company.

Suitable polyisocyanates includes virtually all of the polyisocyanates employed in conventional polyurethane foam formulations, including aromatic, aliphatic and cycloaliphatic polyisocyanates. A representative list of such polyisocyanates includes: 2,4-tolylene diisocyanate, (65:35 mixture of 2,4 and 2,6 isomers) tolylene diisocyanate, (80:20) tolylene diisocyanate, 4,4′-diphenylmethane diisocyanate, dianisidine diisocyanate, tolidine diisocyanate, hexamethylene diisocyanate, *m*-xylylene diisocyanate, phenyl isocyanate, *p*-chlorophenyl isocyanate, *o*-chlorophenyl isocyanate, *m*-chlorophenyl isocyanate, 3,4-dichlorophenyl isocyanate, 2,5-dichlorophenyl isocyanate, methyl isocyanate, ethyl isocyanate, *n*-butyl isocyanate, *n*-propyl isocyanate and octadecyl isocyanate. For many applications it will be preferable for reasons of economy to employ crude mixtures of polyisocyanates. For specific examples, polymethylene polyphenylisocyanates available commercially under the trade names "PAPI" and "Mondur MR" from the Upjohn Company and the Mobay Chemical Company, respectively, are suitable for a number of preferred formulations of the present invention.

Although gas-generating agents which do not include water can be found which produce acceptable foamed polymeric materials according to the present invention, such agents are invariably more expensive than corresponding gas-generating agents which include water. For this reason, it is preferred for the gas-generating agent to include water. Conventional blowing agents for polyurethane foam can be used to advantage in preparing the foamed polymeric materials of the present invention. Although it is not necessary in every case to use a blowing agent in addition to water, the use of water alone as a gas-generating agent tends to produce a material which is friable, which is undesirable for most applications. Examples of

conventional blowing agents are the lowboiling liquids trichlorofluoromethane, dichlorodifluoromethane and dichloromethane (methylene chloride).

A novel blowing agent particularly suited for manufacturing the foamed polymeric materials of the present invention, as well as conventional polyurethane foams, comprises the combination of ethanol and dibutylphthalate. To prepare preferred formulations of the blowing agent, quantities of ethanol and dibutylphthalate are mixed together such that the molar ratio of ethanol to dibutylphthalate is in the range of from about 1.5 to about 4. The blowing agent not only can provide gas for generating foam when mixed with reactants for a foamed polymerization reaction, but can obviate the need for a surfactant to be included in the reaction mix. Even when no additional surfactant is included, foam produced using the ethanol-dibutylphthalate blowing agent of the present invention tends to have a substantially uniform density and be made of bubbles of substantially uniform diameter. The blowing agent can be handled safely since it has a low toxicity.

Although in general the foaming step of the process of the present invention need not be catalyzed, it is ordinarily preferable to do so. A catalyst which can be used successfully to catalyze a reaction among a particular polyhydroxy compound, a particular polyisocyanate and a gas-generating agent in a conventional process to manufacture polyurethane foam generally can also be used in the process of the present invention involving the same polyhydroxy compound, polyisocyanate, and gas-generating agent. Such catalysts are widely known in the art. Representative examples of such catalysts and polyurethane-foam formulations in which they can be used are set forth in pages 69—75 of Vol. 21 of the Kirk-Othmer Encyclopedia cited above. As specific examples, dimethylethanol and triethylamine can be used in certain preferred formulations.

In some cases it may be desirable to adjust the pH of the bitumen-hydroxy fatty oil intermediate product in order to control the rate of subsequent reactions in which the intermediate product takes part. The bitumen-hydroxy fatty oil intermediate product is typically acidic and can be neutralized with sodium hydroxide or other alkaline substance if desired.

For many applications it is advantageous to include a surfactant among the ingredients used to prepare the foamed polymeric material of the present invention, particularly when bulky castings are to be formed. Conventional silicone surfactants used in manufacturing polyurethane foams generally function satisfactorily in the process of the present invention. As specific examples of preferred surfactants, the silicone surfactants commercially available from the Dow Corning Corporation under the trade names "Dow-Corning 193," "Dow Corning 194," and "Dow Corning 197" are cited. As explained above, if the ethanol-dibutylphthalate blowing agent of the present invention is used, the need for surfactant is obviated.

It may also be advantageous to include a plasticizer among the ingredients of the process of the present invention. Preferred plasticizers include dioctylphthalate, diisooctylphthalate, dibutylphthalate, diisobutylphthalate, dicaprylphthalate, diisodecylphthalate, tricresylphosphate, trioctylphosphate, diisooctyladipate and diisodecyladipate.

The process of the present invention can generally be carried out in the following preferred manner, although it will be readily apparent to those skilled in the art that other sequences of steps can be used. The intermediate product is first prepared from a bitumen and a hydroxy fatty oil according to the procedure described above in an enclosed heated tank. In order to reduce air-pollution problems, the tank is preferably connected to a water-cooled condenser to reflux and collect condensible vapors driven off from the reactants during the heating. The intermediate product is then cooled. At the temperature to which it is cooled, the intermediate product should be sufficiently fluid to permit mixing with other ingredients. The polyhydroxy compound and any catalysts, surfactants and plasticizers are then thoroughly mixed with the intermediate product. Generally from 70 parts to 200 parts by weight of polyhydroxy compound are employed for every 100 parts by weight of the bitumen-hydroxy fatty oil intermediate product. The resulting mixture is then combined with the polyisocyanate, blowing agent and water in a conventional mixing head for polyurethane foam. Generally a molar ratio of polyisocyanate to polyhydroxy compound in a range of from 1:1 to 11:1 is preferred. From 0.5 to 1.75 percent by weight of water based on the weight of the polyhydroxy compound is generally preferred. The density of the resulting foamed product is determined to a large degree by the quantities of water and blowing agent used. A temperature in the range of from 30°C to 85°C is preferred for carrying out the final mixing.

Examples

The following examples illustrate particular preferred embodiments of the present invention.

Example 1

Approximately 1000 g of non-blown asphalt is placed in a stainless-steel reactor and melted by heating it to about 150°C for about one hour. Approximately 300 g of castor oil is added to the molten asphalt and the resulting mixture is maintained at about 150°C with stirring for about an hour to form an intermediate product. The intermediate product is allowed to cool to about 50°C and the following ingredients are added to it:

"LS 490" poly (oxypropylene) polyol—about 105 g,
"Dow-Corning 197" silicone surfactant—about 8 g,
dimethylethanolamine—about 3.6 g, and
triethylamine—about 2.0 g.

The poly (oxypropylene) polyol "LS 490" is a commercially available polyether polyol from Union Carbide Corporation and is believed to be a reaction product of sucrose and propylene oxide catalyzed by potassium hydroxide. This polyhydroxy compound has a hydroxy number in the range of from 350 to 800. The resulting mixture is metered to a mixing head where it is combined with water, trichlorofluoromethane blowing agent and the polymethylene polyphenylisocyanate "PAPI". The four ingredients are combined proportionally in the mixing head so that totals of approximately 4.15 g of water, approximately 114 g of trichlorofluoromethane and approximately 955 g of the polyisocyanate "PAPI" are mixed with the quantities of the other ingredients listed above. The stream of reaction mixture is discharged from the mixing head into a mold where the foaming reaction occurs. The temperature of the reaction mixture exiting the mixing head is about 50°C. The reaction mixture is allowed to foam and cure in the mold, where it forms a tough, strong polymeric material.

Example 2

A blowing agent is prepared by combining approximately 28.7 g of ethanol and approximately 57.7 g of dibutylphthalate. The resulting blowing agent is used in place of the trichlorofluoromethane and the silicone surfactant of Example 1. The resulting approximately 86.4 g of ethanol-dibutylphthalate blowing agent is metered into the mixing head where it is mixed proportionally with the other ingredients in the quantities given in Example 1. A foamed polymeric material is produced which cures to a strong, tough product.

Example 3

The steps of Example 1 are repeated, except that for about one-half of the time that the mixture of asphalt and castor oil is maintained at about 150°C, the mixture is maintained under an atmosphere of air pressurized to about 170 kPa. Only about 455 g of the polyisocyanate "PAPI" is required to produce a foamed polymeric material of a quality similar to that produced in Example 1.

Example 4

A surface coated with a foamed polymeric material of the present invention for insulation and the like can be prepared as follows. Approximately 1000 g of non-blown asphalt, approximately 400 g of castor oil, and approximately 200 g of N,N,N',N'-tetrakis (2-hydroxypropyl)-ethylenediamine ("Quadrol") are mixed together and maintained at about 150°C with stirring in a stainless steel container for about one and a half hours to form an intermediate product. The intermediate product is then cooled to about 50°C. A mixture of the following ingredients is prepared at room temperature in a second vessel:

"Quadrol"—approximately 250 g,
dimethylethanolamine—approximately 4.2 g,
"Dow Corning 197" silicon surfactant—approximately 17 g,
trichlorofluoromethane—approximately 255 g, and
water—approximately 8.5 g.

A third vessel contains approximately 952 g of the p,p'-diphenyl methanediisocyanate "Mondur MR." The contents of the three containers are proportionally metered into a mixing head equipped with a spray-discharge nozzle. The temperature of the ingredients is adjusted so that the reaction mixture discharged from the mixing head has a temperature of about 75°C. The reaction mixture from the mixing head is sprayed from the nozzle onto a surface to be coated, which is also maintained at about 75°C. The reaction mixture foams and cures on the surface, forming a coating of foamed polymeric material.

Example 5

A high-density foamed polymeric material particularly adapted for use as a flotation material in the marine industry is prepared as follows. An intermediate product is prepared by heating a mixture of approximately 1000 g of asphalt and approximately 333 g of castor oil for about one hour at about 150°C. The resulting intermediate product is cooled to about 50°C. A mixture of approximately 333 g of the poly (oxypropylene) polyol "LS 490," approximately 3.3 g of dimethylethanolamine, approximately 13.2 g of triethylamine, approximately 233 g of trichlorofluoromethane and approximately 999 g of castor oil is prepared at room temperature. Approximately 1332 g of asphalt and approximately 1864 g of the polyisocyanate "PAPI" are mixed together and heated to about 150°C and then cooled to about 50°C. All three components are then metered to a mixing head whereby they are combined proportionally. Upon being discharged from the mixing head the stream of reaction mixture has a temperature in the range of from 30°C to 90°C. The reaction mixture is deposited in a suitable cavity which it is desired to be filled with foamed material. The temperature of the walls of the cavity are about 50°C. The reaction mixture foams "in place," filling the cavity with a foamed polymeric material having a density of about 64 kg/m$^3$. This product is highly water resistant.

It is not intended to limit the present invention to the specific embodiments

described above. For example, either blown or non-blown asphalt can be used. The foaming reactions can be either catalyzed or uncatalyzed. It is recognized that these and other changes may be made in the compositions and processes specifically described herein without departing from the scope and teachings of the instant invention, and it is intended to encompass all other embodiments, alternatives and modifications consistent with the present invention.

## Claims

1. A process for manufacturing a polymeric foam comprising the step of combining the following ingredients:
   (a) an intermediate reactant prepared by heating a mixture containing a bitumen and a hydroxy fatty oil to a temperature substantially above room temperature and maintaining the mixture at such a temperature for a time sufficient to enable significant fractions of the bitumen and the hydroxy fatty oil to react;
   (b) a polyhydroxy compound;
   (c) a polyisocyanate; and
   (d) a gas-generating agent

to form a polymeric foam.

2. The process according to claim 1, in which the gas-generating agent includes water and a blowing agent.

3. The process according to claim 1—2, in which the hydroxy fatty oil is castor oil.

4. The process according to claim 1—3, in which the bitumen is an asphalt.

5. The process according to claim 1—4, in which the polyhydroxy compound is a polyether polyol having a hydroxyl number in the range of from 350 to 800.

6. The process according to claim 5, in which the polyether polyol is a poly (oxypropylene) polyol.

7. The process according to claim 1—4, in which the polyhydroxy compound is N,N,N',N'-tetrakis (2-hydroxypropyl)-ethylenediamine.

8. The process according to claim 2, in which the blowing agent includes a mixture of dibutylphthalate and ethanol.

9. The process according to claim 7, in which the bitumen is an asphalt and the hydroxy fatty oil is castor oil.

10. The process according to claim 9, in which the mixture from which the intermediate reactant is prepared consists of asphalt and castor oil.

11. A composition of matter comprising the reaction product of asphalt and castor oil, the reaction product being produced by a thermally-induced reaction effected by heating a mixture of asphalt and castor oil to a temperature in the range from 145°C to 155°C, the reaction being carried out under an atmosphere of pressurized air.

12. The composition of matter according to claim 12, in which the pressure of the atmosphere is in a range from 135 kPa to 170 kPa.

13. A process for preparing a polymeric material comprising the steps of heating a mixture of asphalt and castor oil to a temperature in the range of from 145°C to 155°C and maintaining the mixture at such a temperature, for a time in excess of about one hour, the heated mixture being maintained under an atmosphere of pressurized air.

14. The process according to claim 13, in which the pressure of the atmosphere is in a range of from 135 kPa to 170 kPa.

15. A process for preparing a polymeric material comprising the steps of heating a mixture of a bitumen and a hydroxy fatty oil to a temperature substantially above room temperature and maintaining the mixture at such a temperature for a time sufficient to enable significant fractions of the bitumen and the hydroxy fatty oil to react, the heated mixture being maintained under an atmosphere of pressurized air.

16. The process according to claim 15 in which the temperature is in a range of from 140°C to 200°C and the pressure of the atmosphere is in a range from 135 kPa to 170 kPa.

17. A blowing agent for a polymeric foam which comprises a mixture of dibutylphthalate and ethanol.

18. The blowing agent according to claim 17, in which the molar ratio of ethanol to dibutylphthalate is in the range of from 1.5 to 4.

## Patentansprüche

1. Verfahren zur Herstellung eines geschäumten Polymers, das den darin bestehenden Schritt umfasst, dass folgende Bestandteile kombiniert werden:

(a) ein Reagenz-Zwischenstoff, der durch Aufheizung einer Mischung aus einem Bitumen und einem hydroxylierten fetten Öl bis zu einer Temperatur, die wesentlich höher ist als die Umgebungstemperatur und durch Aufrechterhaltung der Mischung bei einer solchen Temperatur während einer ausreichenden, die Reaktion von wichtigen Bruchteilen des Bitumens und des fetten hydroxylierten Öls erlaubenden Zeit, aufbereitet wird;
   (b) eine Polyhydroxyverbindung;
   (c) ein Polyisocyanat; und
   (c) ein gaserzeugendes Mittel,

zur Bildung eines geschäumten Polymers.

2. Verfahren nach Anspruch 1, in welchem das gaserzeugende Mittel aus Wasser und einem Treibmittle besteht.

3. Verfahren nach Anspruch 1 oder 2, in welchem das hydroxylierte fette Öl Rizinusöl ist.

4. Verfahren nach einem der Ansprüche 1 bis 3, in welchem das Bitumen ein Asphalt ist.

5. Verfahren nach einem der Ansprüche 1 bis 4, in welchem die Polyhydroxyverbindung ein

Polyäther-Polyol ist, dessen Hydroxyl-Zahl zwischen 350 und 800 liegt.

6. Verfahren nach Anspruch 5, in welchem das Polyäther-Polyol ein Poly(oxypropylen) polyol ist.

7. Verfahren nach einem der Ansprüche 1 bis 4, in welchem die Polyhydroxyverbindung N,N,N',N'-Tatrakis(2-Hydroxypropyl)-Äthylendiamin ist.

8. Verfahren nach Anspruch 2, in welchem das Treibmittel aus einer Mischung von Dibutylphtalat und Äthanol besteht.

9. Verfahren nach Anspruch 1, in welchem das Bitumen ein Asphalt und das hydroxylierte fette Öl Rizinusöl ist.

10. Verfahren nach Anspruch 9, in welchem die Mischung, aus welcher der Reagenz-Zwischenstoff aufbereitet wird, aus Asphalt und Rizinusöl besteht.

11. Eine den Produkt der Reaktion eines Asphaltes und des Rizinusöls umfassende Zusammensetzung, wobei der Reaktionsprodukt durch eine thermisch verursachte Reaktion erhalten wird, die durch Aufheizung einer Mischung von Asphalt und Rizinusöl bis zu einer Temperatur zwischen 145°C und 155°C und in einer Druckluft-Atmosphäre durchgeführt wird.

12. Zusammensetzung nach Anspruch 11, in welcher der Atmosphärendruck zwischen 135 kPa und 170 kPa beträgt.

13. Verfahren zur Aufbereitung eines Polymerisats, das die darin bestehenden Schritte umfasst, dass eine Mischung aus Asphalt und Rizinusöl bis zu einer Temperatur zwischen 145°C und 155°C aufgeheizt wird, und dass die Mischung bei einer derartigen Temperatur während einer ca. eine Stunde überschreitenden Zeit aufrechterhalten wird, wobei die aufgeheizte Mischung in einer Druckluft-Atmosphäre gehalten wird.

14. Verfahren nach Anspruch 13, in welchem der Atmosphärendruck zwischen 135 kPa und 170 kPa beträgt.

15. Verfahren zur Aufbereitung eines Polymerisats, das die darin bestehenden Schritte umfasst, dass eine Mischung aus einem Bitumen und einem hydroxylierten fetten Öl bis zu einer die Umgebungstemperatur wesentlich überschreitenden Temperatur aufgeheizt wird, und dass die Mischung bei einer solchen Temperatur während einer Zeit aufrechterhalten wird, die ausreichend ist, um die Reaktion wichtiger Bruchteile des Bitumens und des hydroxylierten fetten Öls zu gestatten, wobei die aufgeheizte Mischung in einer Druckluft-Atmosphäre gehalten wird.

16. Verfahren nach Anspruch 15, in welchem die Temperatur zwischen 140°C und 200°C und der Atmosphärendruck zwischen 135 kPa und 170 kPa beträgt.

17. Treibmittel zur Erhaltung eines expandierten Polymers, das aus einer Mischung von Dibutylphtalat und Äthanol besteht.

18. Treibmittel nach Anspruch 17, in welchem das Molverhältnis von Äthanol zum Dibutylphtalat zwischen 1,5 und 4 beträgt.

**Revendications**

1. Procédé de production d'un polymère expansé, comprenant les étapes consistant à combiner les ingrédients suivants:

(a) un corps intermédiaire destiné à réagir, et préparé par chauffage d'un mélange contenant un bitume et une huile grasse hydroxylée, jusqu'à une température nettement supérieure à la température ambiante et maintien du mélange à une telle température pendant un temps suffisant pour permettre à des fractions importantes du bitume et de l'huile grasse hydroxylée de réagir;
(b) un composé polyhydroxylé;
(c) un polyisocyanate; et
(d) un agent générateur de gaz,

pour former un polymère expansé.

2. Procédé selon la revendication 1, dans lequel l'agent générateur de gaz comprend de l'eau et un agent porophore.

3. Procédé selon l'une des revendications 1 et 2, dans lequel l'huile grasse hydroxylée est l'huile de ricin.

4. Procédé selon l'une quelconque des revendications 1 à 3, dans lequel le bitume est un asphalte.

5. Procédé selon l'une quelconque des revendications 1 à 4, dans lequel le composé polyhydroxylé est un polyétherpolyol dont l'indice d'hydroxyle se situe entre 350 et 800.

6. Procédé selon la revendication 5, dans lequel le polyéther-polyol est un poly(oxypropylène)polyol.

7. Procédé selon l'une quelconque des revendications 1 à 4, dans lequel le composé polyhydroxylé est la N,N,N',N'-tétrakis(2-hydroxypropyl)-éthylènediamine.

8. Procédé selon la revendication 2, dans lequel l'agent porophore comprend un mélange de phtalate de dibutyle et d'éthanol.

9. Procédé selon la revendication 1, dans lequel le bitume est un asphalte et l'huile grasse hydroxylée est l'huile de ricin.

10. Procédé selon la revendication 9, dans lequel le mélange à partir duquel le corps intermédiaire, destiné à réagir, east préparé consiste en asphalte et en huile de ricin.

11. Composition comprenant le produit de la réaction d'un asphalte et de l'huile de ricin, le produit de réaction étant obtenu par une réaction, provoquée par voie thermique, et réalisée par chauffage d'un mélange d'asphalte et d'huile de ricin jusqu'à une température comprise entre 145°C et 155°C, la réaction étant effectuée en atmosphère d'air sous pression.

12. Composition selon la revendication 11, dans laquelle la pression de l'atmosphère se situe entre 135 kPa et 170 kPa.

13. Procédé pour préparer une matière polymère, comprenant les étapes consistant à chauffer un mélange d'asphalte et d'huile de ricin jusqu'à une température comprise entre 145°C et 155°C et à maintenir le mélange à une telle température pendant un temps excédant une heure environ, le mélange chauffé étant maintenu sous une atmosphère d'air sous pression.

14. Procédé selon la revendication 13, dans lequel la pression de l'atmosphère se situe entre 135 kPa et 170 kPa.

15. Procédé pour préparer une matière polymère, comprenant les étapes consistant à chauffer un mélange d'un bitume et d'une huile grasse hydroxylée jusqu'à une température nettement supérieure à la température ambiante et à maintenir le mélange à une telle température pendant un temps suffisant pour permettre la réaction de fractions importantes du bitume et de l'huile grasse hydroxylée, le mélange chauffé étant maintenu sous une atmosphère d'air sous pression.

16. Procédé selon la revendication 15, dans lequel la température se situe entre 140°C et 200°C, et la pression de l'atmosphère se situe entre 135 kPa et 170 kPa.

17. Agent porophore pour l'obtention d'un polymère expansé, et qui comprend un mélange de phtalate de dibutyle et d'éthanol.

18. Agent porophore selon la revendication 17, dans lequel la rapport molaire de l'éthanol au phtalate de dibutyle se situe entre 1,5 et 4.